# EUROPÄISCHE PATENTSCHRIFT

(11) **EP 2 914 812 B1**
(45) Veröffentlichungstag und Bekanntmachung des Hinweises auf die Patenterteilung: **23.10.2024**
(21) Anmeldenummer: 13785846.0
(22) Anmeldetag: 30.10.2013
(51) Int. Cl.: F01C 17/00, F04C 2/08, F04C 2/12, F04C 15/00, F04C 2/16, F01C 1/12, F01C 1/16

(54) **DREHKOLBENPUMPE MIT DIREKTANTRIEB**
ROTARY PISTON PUMP HAVING DIRECT DRIVE
POMPE À PISTONS ROTATIFS À ENTRAINEMENT DIRECT

(30) Priorität: 31.10.2012 DE 202012010401 U
(43) Veröffentlichungstag der Anmeldung: 09.09.2015
(73) Patentinhaber: Hugo Vogelsang Maschinenbau GmbH, 49632 Essen (DE)
(72) Erfinder: KRAMPE, Paul, 49632 Essen/Olbg (DE); VOGELSANG, Hugo, 49624 Löningen/Bunnen (DE)
(74) Vertreter: Eisenführ Speiser
(86) Internationale Anmeldenummer: PCT/EP2013/072693
(87) Internationale Veröffentlichungsnummer: WO 2014/067988

(56) Entgegenhaltungen:
- EP-A1- 1 519 044
- EP-B1- 2 956 672
- EP-B1- 2 956 672
- EP-B1- 2 956 672
- DE-A1- 19 522 515
- DE-A1- 19 522 515
- DE-A1- 19 522 515
- DE-A1- 19 522 515
- DE-A1- 19 820 622
- DE-A1- 19 820 622
- DE-A1- 19 820 622
- DE-A1- 19 820 622
- DE-A1- 19 859 287
- DE-A1- 19 859 287
- DE-A1- 19 859 287
- DE-A1- 19 859 287
- DE-A1- 4 330 085
- US-A- 5 468 132
- US-A- 5 468 132
- US-A- 5 468 132
- US-A- 5 468 132
- US-A1- 2006 196 184
- US-A1- 2006 196 184
- US-A1- 2006 196 184
- US-A1- 2006 196 184
- US-A1- 2010 038 910
- US-A1- 2010 038 910
- US-A1- 2010 038 910

## Beschreibung

Die Erfindung betrifft eine Wasserkraftanlage, mit einem Drehkolbenmotor, umfassend ein Motorgehäuse mit einem Motorraum, eine Einlass- und eine Auslassöffnung, einen ersten, mehrflügeligen Drehkolben, der in dem Motorraum angeordnet und um ein erste Achse drehbar gelagert ist und einen zweiten in dem Motorraum angeordneten mehrflügeligen Drehkolben, der um eine von der ersten Achse beabstandete zweite Achse drehbar gelagert ist und in den ersten Drehkolben kämmend eingreift, wobei der erste und zweite Drehkolben durch eine Fluidströmung von der Einlass- zu der Auslassöffnung in Rotation um die erste bzw. zweite Achse versetzt werden, eine Generatorvorrichtung welche mechanisch mit den Drehkolben gekoppelt ist zum Antrieb durch die Drehkolben. Aus EP 1519044 B1 ist eine Drehkolbenpumpe vorbekannt, die über zwei Wellen verfügt, auf denen miteinander kämmende Drehkolben drehmomentfest befestigt sind. Jede Welle wird mittels eines Hydraulikmotors angetrieben. Grundsätzlich kann mit einer solchen Antriebsweise erreicht werden, dass die für den Betrieb einer Drehkolbenpumpe erforderliche Synchronisation der Drehbewegung der beiden Drehkolben durch die Kämmbewegung der beiden Drehkolben miteinander selbst erzeugt wird, was einen Direktantrieb jedes einzelnen Drehkolbens mittels dem separaten Hydraulikmotor ermöglicht. Während im normalen Betrieb einer solchen Drehkolbenpumpe das Drehmoment, welches an jedem einzelnen Drehkolben auftritt, über einen längeren Zeitraum gemittelt für beide Drehkolben gleich ist, zeigen sich bei Betrachtung kürzerer Zeitspannen Drehmomentunterschiede zwischen den beiden Drehkolben, wenn Zeiträume betrachtet werden, die kürzer als die Zeitspanne sind, die für eine gesamte Umdrehung benötigt werden. Diese Drehmomentdifferenzen werden durch die Kämmung der beiden Drehkolben miteinander aufgefangen, dies hat aber zur Folge, dass Verschleiß an den Drehkolben durch den Kontakt zueinander auftritt und die Belastung der Lager, in denen die Wellen der Drehkolben gelagert sind, hierdurch zunimmt. Der Vorteil, der durch den hydraulischen Direktantrieb erreicht wird, wird hierdurch teilweise hinsichtlich des Wirkungsgrades der Drehkolbenpumpe herab gesetzt.

Aus US 5 468 132 A und US 2006/196184 A1 sind Wasserkraftanlagen vorbekannt. Aus DE 198 59 287 A1, DE 198 20 622 A1 und DE 195 22 515 A1 sind weitere Verdrängermaschinen mit mehreren Motoren vorbekannt.

Der Erfindung liegt die Aufgabe zugrunde, eine Wasserkraftanlage bereit zu stellen, welche in einer wirtschaftlich effizienteren Weise zu betreiben ist als vorbekannte Wasserkraftanlagen.

Diese Aufgabe wird erreicht, indem der erste und der zweite Drehkolben jeweils eine Anzahl von N Flügeln aufweist, wobei N größer oder gleich zwei ist und die Flügel des ersten und des zweiten Drehkolbens schraubenförmig entlang der Umfangsfläche des Drehkolbens verlaufen und hierbei einen Winkel von zumindest 300° dividiert durch N, vorzugsweise 360° dividiert durch N überstreichen und die Generatorvorrichtung einen ersten elektrischen Generator, der mit dem ersten Drehkolben mechanisch gekoppelt ist zum Antrieb durch den ersten Drehkolben und einen zweiten elektrischen Generator, der mit dem zweiten Drehkolbens mechanisch gekoppelt ist zum Antrieb durch den zweiten Drehkolbens, umfasst..

Durch die erfindungsgemäße Wasserkraftanlage wird einerseits ein Direktantrieb der elektrischen Generatoren ermöglicht, was eine Wirkungsgradsteigerung durch den hohen Wirkungsgrad von Generatoren erzielt. Diese Direktantriebsweise wird ermöglicht, indem die Flügel der Drehkolben schraubenförmig entlang der Umfangsfläche des Drehkolbens verlaufen und hierbei einen Winkelbereich überstreichen, der nahe eines dem Bruchteil der Flügelanzahl entsprechenden Anteils einer vollen Umdrehung liegt und vorzugsweise dem entsprechenden Bruchteil einer vollen Umdrehung entspricht oder diese übersteigt. Durch diesen gewendelten Verlauf der Flügel der Drehkolben wird erreicht, dass die kurzzeitig auftretenden Drehmomentdifferenzen zwischen den beiden Drehkolben maßgeblich reduziert werden oder, bei einem schraubenförmigen Verlaufen über 360° durch N, vollständig vermieden werden. Hierdurch wird der Verschleiß an den Drehkolben aufgrund einer theoretisch nicht mehr erforderlichen Synchronisationswirkung durch die Kämmbewegung der beiden Drehkolben und der hierdurch reduzierten Lagerbelastung und -kräfte innerhalb der Wasserkraftanlage maßgeblich reduziert.

Als weiteren besonderen Vorteil der erfindungsgemäßen Wasserkraftanlage hat sich ein nahezu oder vollständig pulsationsfreier Betrieb gezeigt, bei dem die von der Wasserkraftanlage geförderte Flüssigkeit in einem konstanten, pulsfreien Strom gefördert wird. Dies hat eine maßgebliche Reduktion der Beschleunigungs- und Bremsvorgänge und der hierdurch erzeugten Lager- und Leitungsbelastung der Wasserkraftanlage und der an sie angeschlossenen Förderleitungen zur Folge.

Grundsätzlich können die Generatoren der erfindungsgemäßen Wasserkraftanlage mittels einer Unter- oder Übersetzung und ggf. über ein Synchronisationsgetriebe mit den Drehkolben mechanisch gekoppelt sein, beispielsweise um einen Generator mit besonders hoher oder besonders niedriger Drehzahl einzusetzen oder um zwei Generatoren mit maximalen Wirkungsgrad bei unterschiedlichen Drehzahlbereichen einzusetzen und alternierend zu betreiben. Es ist aber besonders bevorzugt, wenn der erste und zweite Generator direkt mit dem ersten bzw. zweiten Drehkolben mechanisch gekoppelt ist, insbesondere indem der erste Generator direkt durch eine erste Welle angetrieben wird, auf welcher der erste Drehkolben drehmomentfest befestigt ist und dass der zweite Generator direkt durch eine zweite Welle angetrieben wird, auf welcher der zweite Drehkolben drehmomentfest befestigt ist. Durch diese direkte mechanische Kopplung, welche ohne Zwischenschaltung eines Getriebes solcherart erfolgt, dass die Drehzahl des Generators der Drehzahl des Drehkolbens entspricht, wird der Wirkungsgrad der Wasserkraftanlage weiter erhöht.

Dabei ist es insbesondere bevorzugt, wenn die Wasserkraftanlage getriebelos ist. Durch eine solche getriebelose Ausführung wird vermieden, dass Wirkungsgradverluste durch Reibung in einem Getriebe der Wasserkraftanlage auftreten, insbesondere wird auf ein Synchronisationsgetriebe zwischen den beiden Drehkolben verzichtet, was durch die erfindungsgemäße Konfiguration ermöglicht wird. Unter einer getriebelosen Ausführung ist hierbei zu verstehen, dass die Drehkolben der Wasserkraftanlage alleine durch ihre Kämmbewegung miteinander synchronisiert sind, d.h. wenn einer der beiden Drehkolben von der Drehkolbenwelle demontiert ist können die beiden Wellen unabhängig voneinander rotieren. Weiterhin liegt ein Vorteil der getriebelosen Ausführung darin, dass hierdurch die Belastung der Lager reduziert werden kann und folglich die Lager kleiner dimensioniert werden können bzw. bei gleicher Dimensionierung höhere Pumpendrücke aufgenommen werden können.

Gemäß einer weiteren bevorzugten Ausführungsform ist vorgehsehen, dass zumindest eine der Wellen in zumindest einem Gleitlager drehbar gelagert ist, welches mittels des geförderten Fluidmediums geschmiert wird, vorzugsweise die erste und die zweite Wellen in Gleitlagern gelagert sind, die durch das geförderte Fluidmedium geschmiert werden. Eine Lagerung in Gleitlagern, die durch das geförderte Fluidmedium selbst geschmiert werden, ist grundsätzlich aufgrund der damit verbundenen Reduktion des Wartungsaufwandes bevorzugt. Insbesondere kann diese Art der Lagerung für die erfindungsgemäße Wasserkraftanlage vorteilhaft sein, weil aufgrund der statischen, nicht pulsierenden Druckverhältnisse im Motorinnenraum die Druckbeaufschlagung des Gleitlagers durch das geförderte Fluid eine kalkulierbare Auslegungsgröße für die Lagerlebensdauer und die Auslegung des Lagers in Bezug auf die Lagerkräfte darstellt. Weiterhin ermöglicht diese Ausführungsform einen ölfreien Betrieb, was insbesondere in den mit der erfindungsgemäßen Wasserkraftanlage möglichen Trinkwasseranwendungen vorteilhaft ist. Besonders bevorzugt ist es dabei, mediumgeschmierte keramische Gleitlager einzusetzen, die eine ausreichende Lebensdauer und Resistenz gegenüber einer Vielzahl geförderter Flüssigkeiten, insbesondere gegenüber Wasser aufweisen. Ein weiterer Vorteil der Verwendung von Gleitlagern sind die damit erreichbaren höheren Tragzahlen bei gleichem Bauraum, was es ermöglicht, höhere Pumpendrücke aufzunehmen.

Es ist besonders bevorzugt, wenn die mechanische Synchronisation der Drehbewegung des ersten und zweiten Drehkolbens durch die miteinander kämmenden ersten und zweiten Drehkolben erfolgt. Durch diese mechanische Synchronisation über die miteinander verzahnten Drehkolben kann auf eine Synchronisationsgetriebe, welches getrennt von den Drehkolben vorgesehen wäre, verzichtet werden und hierdurch Wirkungsgradverluste in Folge von Reibung in einem solchen Getriebe vermieden werden. Weiterhin kann die erfindungsgemäße Wasserkraftanlage aufgrund dieser Synchronisationsart besonders kompakt und langlebig aufgebaut werden. Schließlich ist diese Fortbildung besonders vorteilhaft, wenn ein ölfreier Betrieb angestrebt wird, da in diesem Fall auf ein Getriebe, welches ggf. eine Ölschmierung erfordert, verzichtet werden kann.

Grundsätzlich können die Drehkolben der erfindungsgemäßen Wasserkraftanlage bevorzugt drei, vier, fünf, sechs, sieben oder mehr als sieben Flügel aufweisen. Bevorzugte Ausführungsformen der Erfindung sehen jedoch vor, dass jeder Drehkolben dreiflügelig ist und sich jeder Flügel schraubenförmig über einen Winkel von zumindest 100°, vorzugsweise 120° erstreckt, oder jeder Drehkolben vierflügelig ist und sich jeder Flügel schraubenförmig über einen Winkel von zumindest 75°, vorzugsweise 90° erstreckt, oder jeder Drehkolben sechsflügelig ist und sich jeder Flügel schraubenförmig über einen Winkel von zumindest 50°, vorzugsweise 60° erstreckt. Mit diesen drei Fortbildungen wird eine besonders vorteilhafte Auslegung für einen pulsationsfreien Betrieb bei geringen oder keinen Drehmomentschwankungen zwischen den beiden Drehkolben erreicht, wenn zwei, drei oder vier Flügel an jedem Drehkolben vorgesehen sind. Dabei ist zu verstehen, dass bei regulärer Auslegung die optimale Pulsationsreduktion und Vermeidung von Drehmomentspitzen bei 120° 90° bzw. 60° für den drei-, vier- bzw. sechsflügeligen Drehkolben erzielt wird.

Noch weiter ist es bevorzugt, dass das Motorgehäuse den Motorraum zwischen Ein- und Auslassöffnung auf zumindest einer Seite mit einem ersten Innenumfangswandabschnitt begrenzt und die Flügel des ersten Drehkolbens sich schraubenförmig über einen Winkel erstrecken, der so groß ist, dass in jeder Drehstellung des ersten Drehkolbens eine Kontaktlinie zwischen dem Flügel und dem ersten Innenumfangswandabschnitt eine Dichtlinie zwischen der Ein- und Auslassöffnung ausbildet und dass vorzugsweise das Motorgehäuse den Motorraum zwischen Ein- und Auslassöffnung mit einem ersten und einem zweiten Innenumfangswandabschnitt begrenzt und die Flügel des zweiten Drehkolbens sich schraubenförmig über einen Winkel erstrecken, der so klein ist, dass in jeder Drehstellung des zweiten Drehkolbens eine Kontaktlinie zwischen dem Flügel und dem zweiten Innenumfangswandabschnitt eine Dichtlinie zwischen der Ein- und Auslassöffnung ausbildet.

Eine Wasserkraftanlage wird typischerweise durch die Förderflüssigkeit von der Einlass- zur Auslassöffnung über zwei typischerweise 180° überstreichende Innenumfangsabschnitte durchströmt, in denen die Förderflüssigkeit in den Zwischenräumen zwischen den Flügeln der Drehkolben transportiert wird. Durch die Kämmung der Drehkolben erfolgt in der Mitte zwischen den beiden Drehkolbenachsen eine Verdrängung der Flüssigkeit und folglich keine Förderung. Um die Wasserkraftanlage durchlaufsicher zu machen, d.h. bei Stillstand der Wasserkraftanlageeine Rückströmung von der Auslass- zur Einlassseite zu verhindern, ist es bevorzugt, dass die Drehkolben den Weg von der Auslass- zur Einlassöffnung bei Stillstand versperren. Wenn jedoch, wie erfindungsgemäß vorgesehen, ein schraubenförmiger Verlauf der Flügel vorgesehen ist, so kann bei bestimmten Auslegungen, insbesondere dann, wenn der schraubenförmige Verlauf eine nur geringe Steigung aufweist, keine durchgehende Dichtlinie durch den Kontaktbereich zwischen Flügel und Innenwandung des Motorraums ausgebildet werden, wodurch keine Durchlaufsicherheit besteht. Während für einen pulsationsreduzierten und in der Differenz der Drehmomente optimierten Betrieb ein Verlauf der Flügel mit geringer Steigung angestrebt wird, ist dies aus Gründen der Durchflusssicherheit nicht erstrebenswert, sodass die Reduktion der Steigung der Flügel durch den Umschlingungswinkel der Gehäuseinnenwand begrenzt wird.

Gemäß dieser Ausführungsform ist vorgesehen, dass bei jeder Stellung des Drehkolbens eine durchgehende Dichtungslinie über diesen Umfangsinnenwandabschnitt mit dem durch die Gehäusebauform vorgegebenen Umschlingungswinkel erzielt wird. Dabei ist zu verstehen, dass für einen wirksame Antrieb der Wasserkraftanlage lediglich sichergestellt sein muss, dass zwischen dem Flügel eines Drehkolbens und dem Umfangsinnenwandabschnitt zwischen Ein- und Auslassöffnung in zumindest einer Drehstellung zwei durchgehende Dichtungslinien über die gesamte Länge des Motorraums ausgebildet sein müssen, sodass eine durchgehende Dichtungslinie in jeder Stellung des Drehkolbens ausgebildet ist. Während dies für einen vierflügeligen Drehkolben mit einem schraubenförmigen Verlauf jedes Flügels über 90° über die Länge des Drehkolbens erreicht wird, wenn der Umfangsinnenwandabschnitt mindestens 180° Umschlingungswinkel aufweist, kann dies bei einem dreiflügeligen Drehkolben mit einem schraubenförmigen Verlauf über 120° nur noch mit einer sehr kleinen Einlass- und Auslassöffnung und bei einem zweiflügeligen Drehkolben mit einem schraubenförmigen Verlauf über 180° nicht mehr erreicht werden. Insbesondere beim letztgenannten wird zwar in genau einer Stellung eine vollständige Dichtlinie des Flügels gegen den Umfangswandabschnitt erreicht, wenn aber der Drehkolben sich bereits um wenige Grad aus dieser dichtenden Stellung weitergedreht hat, kann die Wasserkraftanlagerückwarts durchströmt werden, da die zuvor vollständig ausgebildete Dichtungslinie nun teilweise unterbrochen ist und der neu in Kontakt mit dem Umfangswandabschnitt tretende Flügel erst einen kleinen Teil seiner Dichtungslinie aufgebaut hat.

Noch weiter ist es bevorzugt, dass mehrere Drehkolben koaxial nebeneinander im Motorraum angeordnet sind, wobei die koaxial nebeneinander angeordneten Drehkolben vorzugsweise zueinander entgegengesetzt verlaufende Flügel aufweisen. Durch eine solche Ausgestaltung kann die Leistungsfähigkeit der Pumpe erhöht werden, ohne das hierbei die positiven Eigenschaften hinsichtlich Pulsationsreduktion und Vermeidung von Drehmomentdifferenzen zwischen den Drehkolben aufgegeben werden. Dabei ist zu verstehen, dass jeder der axial hintereinander gestaffelten Drehkolben einen schraubenförmigen Verlauf der Flügel im zuvor erläuterten Winkelbereich aufweisen muss, um die erfindungsgemäßen Vorteile zu erzielen. Die in dieser Weise aneinander gesetzten Drehkolben können einstückig oder mehrstückig ausgeführt sein.

Weiter ist bevorzugt vorgesehen, dass der Motorraum zwischen dem ersten und dem zweiten elektrischen Generator angeordnet ist. Bei dieser Anordnung sind die elektrischen Generatoren an einander gegenüberliegenden Seiten des Motorgehäuses angeordnet, d.h. die eine Welle erstreckt sich durch einen linken Gehäusedeckel zu ihrem Generator und die Welle des anderen Drehkolbens erstreckt sich durch einen rechten Gehäusedeckel zu ihrem Generator. Die Generatoren sind durch diese Anordnungsweise leicht für Wartungszwecke zugänglich und in ihrem Durchmesser nicht durch eine benachbarte Anordnung beider Generatoren begrenzt, wodurch eine insgesamt kompakte Bauweise mit hocheffizienten elektrischen Generatoren erreicht werden kann.

Schließlich ist es noch weiter bevorzugt, wenn der erste und der zweite Generator in einem ersten Betriebsmodus als Kraftmaschine zur Wandlung von elektrischer Energie in Strömungsenergie geschaltet sind, und in einem zweiten Betriebsmodus als Generatormaschine zur Wandlung von Strömungsenergie in elektrische Energie geschaltet sind. Bei dieser spezifischen Ausgestaltung wird die Wasserkraftanlage in einem ersten Betriebsmodus zur Förderung einer Flüssigkeit als Pumpe eingesetzt und in diesem Modus entsprechend die Drehkolben durch die elektrischen Generatoren in Rotation versetzt. In dem zweiten Betriebsmodus hingegen wird die Wasserkraftanlage als Drehkolbenmaschine bzw. als Turbine eingesetzt. Bei diesem zweiten Betriebsmodus werden die Drehkolben durch eine zwischen Ein- und Auslassöffnung herrschende Druckdifferenz in Rotation versetzt, übertragen diese Rotation durch die mechanische Kopplung auf den Generator, der bei diesem Betriebsmodus als elektrischer Generator arbeitet und aus dieser Rotation elektrische Energie erzeugt. Die Möglichkeit des Betriebs in solchen zwei Betriebsmodi kann insbesondere bei Anwendungen vorteilhaft sein, in denen Flüssigkeit einerseits gegen einen Widerstand gefördert werden muss, andererseits auch in einem Rückstrom mit Druckdifferenz zurückfließen kann und soll, hierbei aber insbesondere gedrosselt werden soll, um beispielsweise zu hohe Strömungsgeschwindigkeiten zu verhindern oder um den Druck abzubauen. In diesem Fall kann die Pumpwirkung durch die Wasserkraftanlage im ersten Betriebsmodus erbracht werden und im zweiten Betriebsmodus wird die Wasserkraftanlage als Drossel eingesetzt und erzeugt hierbei zugleich elektrische Energie, die ggf. in einem internen Spannungsnetzwerk zwischengespeichert werden kann, beispielsweise in einem entsprechenden Akkumulator oder entsprechend dimensioniertem Kondensator oder die in ein öffentliches Netz eingespeist werden kann, um hierdurch die wirtschaftliche Bilanz des Benutzers der Wasserkraftanlage zu verbessern.

Schließlich ist vorteilhaft, dass mit der erfindungsgemäßen Wasserkraftanlage ein direkter Antrieb eines elektrischen Generators aus jeweils einem Drehkolben realisiert werden kann, also insbesondere bei Aufbau der Wasserkraftanlage mit zwei miteinander kämmenden Drehkolben entsprechend zwei elektrische Generatoren direkt angetrieben werden können. Dies vermindert wiederum die Massenträgheit des Systems und etwaige Reibungsverluste durch Übertragung der Rotation mittels Getrieben, Riementrieben oder dergleichen.

Schließlich ist ein weiterer wesentlicher Vorteil der erfindungsgemäßen Wasserkraftanlage die Möglichkeit des ölfreien Betriebs mittels Gleitlagern, die durch das im Motorraum befindliche Medium, also insbesondere Wasser, geschmiert werden. Dies erlaubt den Einsatz der Wasserkraftanlage zur Energiegewinnung aus Trinkwasserversorgungsleitungen ohne dass hierfür besondere nachgeschaltete Reinigungsmaßnahmen oder dergleichen erforderlich wären.

Die erfindungsgemäße Wasserkraftanlage kann dabei fortgebildet werden, wie dies zuvor für die erfindungsgemäße Wasserkraftanlage erläutert wurde, mit der Vorgabe, dass das Motorgehäuse dem Motorgehäuse, der Motorraum dem Motorraum, die Generatorvorrichtung der Generatorvorrichtung, und der elektrische Generator dem elektrischen Generator entspricht. Mit diesen Fortbildungen werden die zuvor erläuterten Vorteile der Wasserkraftanlage auch für die Wasserkraftanlage entsprechend umgesetzt und diesbezüglich wird auf die voranstehende Beschreibung der entsprechenden Vorteile und Ausgestaltungsvarianten Bezug genommen. Grundsätzlich wird dabei von einer Drehkolbenmaschine ausgegangen die als Wasserkraftanlage bzw. Drehkolbenmotor betrieben werden kann und entsprechend einen als Pumpen- bzw. Motorgehäuse ausgebildetes Maschinengehäuse, einen als Pumpen- bzw. Motorraum ausgebildeten Maschinenraum und eine Generatorvorrichtung bzw. Generatorvorrichtung sowie elektrische Generatoren bzw. elektrische Generatoren aufweist.

Ein Verfahren zum Pumpen einer Flüssigkeit mit einer Wasserkraftanlage in erfindungsgemäßer Weise zeichnet sich vorzugsweise dadurch aus, dass die Flüssigkeit mittels eines ersten und zweiten Drehkolbens, die jeweils eine Anzahl von N Flügeln aufweisen, wobei N größer oder gleich zwei ist und die Flügel des ersten und des zweiten Drehkolbens schraubenförmig entlang der Umfangsfläche des Drehkolbens verlaufen und hierbei einen Winkel von zumindest 300° dividiert durch N, vorzugsweise 360° dividiert durch N überstreichen, durch einen Motorraum gefördert wird und dass der erste Drehkolben mittels eines ersten elektrischen Generator, der mit dem ersten Drehkolben mechanisch gekoppelt ist angetrieben wird und der zweite Drehkolben mittels eines zweiten elektrischen Generators, der mit dem zweiten Drehkolben mechanisch gekoppelt ist angetrieben werden.

Ein Verfahren zum Erzeugen elektrischer Energie aus einer Flüssigkeitsdruckdifferenz mit einer Drehkolbenmotor in der erfindungsgemäßen Weise zeichnet sich vorzugsweise dadurch aus, dass mit der Flüssigkeitsdruckdifferenz ein erster und ein zweiter, mit dem ersten kämmender Drehkolben der Drehkolbenmotor angetrieben und in Rotation entsprechend eine erste und eine zweite Achse versetzt werden, wobei der erste und zweite Drehkolben jeweils eine Anzahl von N Flügeln aufweisen, wobei N größer oder gleich zwei ist und die Flügel des ersten und des zweiten Drehkolbens schraubenförmig entlang der Umfangsfläche des Drehkolbens verlaufen und hierbei einen Winkel von zumindest 300° dividiert durch N, vorzugsweise 360° dividiert durch N überstreichen, und dass der erste Drehkolben einen ersten elektrischen Generator, der mit dem ersten Drehkolben mechanisch gekoppelt ist antreibt und der zweite Drehkolben einen zweiten elektrischen Generator, der mit dem zweiten Drehkolben mechanisch gekoppelt ist, antreibt.

Dabei können beide Verfahren insbesondere dadurch fortgebildet werden, dass die Rotation der miteinander kämmenden Drehkolben der Wasserkraftanlage bzw. -Motor nicht mittels eines Getriebes synchronisiert werden.

Bevorzugte Ausführungsformen der Erfindung werden anhand der nachfolgenden Figuren erläutert. Es zeigen:
Fig. 1 eine längsgeschnittene Ansicht einer erfindungsgemäßen Wasserkraftanlage,
Fig. 2 eine perspektivische Ansicht eines Drehkolbens mit einer Gehäusehalbschale in einer ersten Ausführungsform, und
Fig. 3 eine Ansicht gem. Figur 2 mit einer zweiten Ausführungsform eines Drehkolbens.

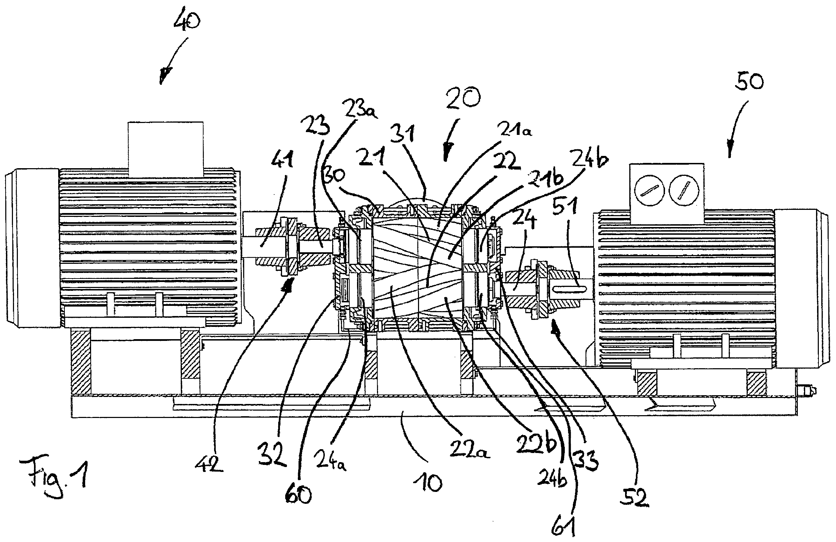

Figur 1 zeigt eine als Wasserkraftanlage betreibbare Vorrichtung, die aus insgesamt vier Baugruppen zusammengesetzt ist: Auf einem Rahmenfundament 10 ist mittig eine Gehäuseinheit 20 befestigt, welche von einem linken elektrischen Generator 40 und einem rechten elektrischen Generator 50 flankiert ist, die ebenfalls auf dem Rahmenfundament 10 befestigt sind.

Die Generatoren 40, 50 sind als Drehstromgeneratoren ausgeführt und können einerseits in einem ersten Betriebsmodus mit elektrischer Energie versorgt werden, um über eine Abtriebswelle 41, 51 jeweils einen Drehkolben 21, 22 in der Wasserkraftanlage 20 anzutreiben. In einem zweiten Betriebsmodus können die Generatoren 40, 50 als Generator betrieben werden. In diesem zweiten Betriebsmodus wird über die Abtriebswelle 41, 51 ein Drehmoment von dem Drehkolben 21 bzw. 22 auf den Generator 40 bzw. 50 übertragen und der Generator 40 bzw. 50 erzeugt eine elektrische Energie, die zwischengespeichert oder in ein Netz eingespeist werden kann.

Die Wasserkraftanlage 20 weist ein Gehäuse 30 auf, das mehrteilig aufgebaut ist. An dem Gehäuse 30 sind Einlass- und Auslassöffnungen angeordnet, die durch Verbindung von Flanschen entsprechend angeschlossen werden können, in Figur 1 ist der Flansch 31 der Auslassöffnung erkennbar.

Die zwei Drehkolben 21, 22 sind in einem Motorraum, der durch das Motorgehäuse 30 allseitig begrenzt wird, angeordnet. Die Drehkolben 21, 22 sind drehmomentfest auf Drehkolbenwellen 23, 24 befestigt.

Wie aus Figur 1 ersichtlich, weisen beide Drehkolben 21, 22 mehrere Flügel 21a/b, 22a/b auf, die miteinander nach Art von Zähnen zweier Zahnräder im Eingriff stehen und folglich miteinander kämmen. Durch diesen Eingriff der Flügel der Drehkolben können die Wellen 23, 24 zwangsläufig nur mit übereinstimmender Drehzahl rotieren.

Die Drehkolbenwelle 23 des oberen Drehkolbens 21 ist in einem rechtsseitigen Gleitlager 23a und einem linksseitigen Gleitlager 23b gelagert. Beide Gleitlager 23a, b sind als ölfreie Lager ausgeführt und werden durch die Flüssigkeit geschmiert, die durch den Motorraum strömt. Zu diesem Zweck sind entsprechende Drainageleitungen 60, 61 vorgesehen. Die Drainageleitung 60 mündet in einen Gehäusedeckel 32, die Drainageleitung 61 mündet in einen Gehäusedeckel 33 auf der rechten Seite der Wasserkraftanlage.

Die Drehkolbenwelle 23 erstreckt sich durch den linken Gehäusedeckel 32 bis zu einer Kupplungseinheit 42, mittels welcher die Drehkolbenwelle 23 drehmomentfest mit der Abtriebswelle 41 des Generators 40 gekoppelt ist. Im rechten Gehäusedeckel 33 ist die Drehkolbenwelle 23 gelagert, erstreckt sich aber nicht durch diesen Gehäusedeckel hindurch.

Die Drehkolbenwelle 24 erstreckt sich durch den rechten Gehäusedeckel 33 zu einer Kupplung 52, mittels der sie drehmomentfest mit der Abtriebswelle 51 des Generators 50 gekoppelt ist. Diese Drehkolbenwelle 24 ist wiederum im linken Gehäusedeckel 32 gelagert, erstreckt sich aber nicht durch diesen linken Gehäusedeckel hindurch.

Wie ersichtlich, ist über die Kupplung 42 der Generator 40 direkt mit dem Drehkolben 21 gekoppelt und treibt diesen an bzw. wird im Generatorbetrieb durch diesen angetrieben. Ebenso ist über die Kupplung 52 der Generator 50 direkt mit dem Drehkolben 22 gekoppelt und treibt diesen an bzw. wird durch diesen angetrieben. Eine Getriebeunter- oder Übersetzung oder ein sonstiges Getriebe zur Synchronisation der Drehbewegung der Drehkolben 21, 22 ist an der erfindungsgemäßen Wasserkraftanlage gemäß Figur 1 nicht vorhanden.

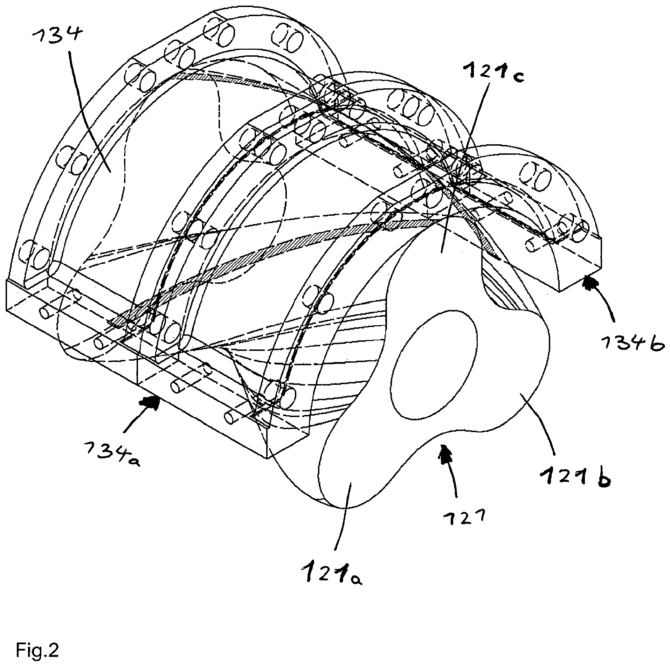

Figur 2 zeigt einen dreiflügeligen Drehkolben 121, der insgesamt 3 Flügel 121a, b, c aufweist. Jeder der drei Flügel ist über die gesamte, sich axial erstreckende Länge des Drehkolbens um 120° entlang einer Schraubenlinie gebunden.

Der Drehkolben 121 ist in Figur 2 in einer Gehäusehalbschale 134 abgebildet, welche einen oberen Begrenzungsrand 134a einer Einlassöffnung und einen oberen Begrenzungsrand 134b einer Auslassöffnung definieren.

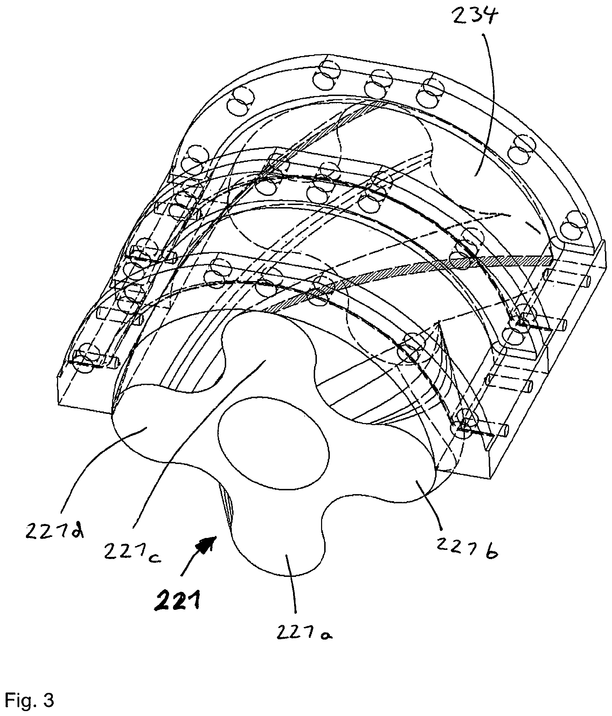

Figur 3 zeigt einen Drehkolben 221 mit insgesamt 4 Flügeln 221a-d. Jeder Flügel ist über die gesamte, axiale Länge des Drehkolbens 221 schraubenförmig über einen Umfangswinkel von 90° gewunden.

Der Drehkolben 221 ist wiederum in einer Gehäusehalbschale 234 abgebildet, welche der Gehäusehalbschale 134 entspricht.

Grundsätzlich ist zu verstehen, dass die Drehkolben 121, 221 mit jeweils einem, vertikal darunterliegenden Drehkolben im Betrieb zusammenwirken und kämmen. Dieser zweite Drehkolben entspricht hinsichtlich seiner Flügelanzahl und dem Winkel, über den sich ein Flügel schraubenförmig über die Länge des Drehkolbens erstreckt, dem Drehkolben 121 bzw. 221. Allerdings ist der darunterliegende Drehkolben solcherart ausgestaltet, dass der Flügel sich in entgegen gerichtetem Drehsinn erstreckt, sodass eine Kämmbewegung der beiden Drehkolben ermöglicht wird.

## Patentansprüche

1. Wasserkraftanlage, mit
einem Drehkolbenmotor, umfassend
- ein Motorgehäuse mit einem Motorraum,
- eine Einlass- und eine Auslassöffnung,
- einen ersten, mehrflügeligen Drehkolben, der in dem Motorraum angeordnet und um ein erste Achse drehbar gelagert ist, und
- einen zweiten in dem Motorraum angeordneten mehrflügeligen Drehkolben, der um eine von der ersten Achse beabstandete zweite Achse drehbar gelagert ist und in den ersten Drehkolben kämmend eingreift,
wobei der erste und zweite Drehkolben durch eine Fluidströmung von der Einlass- zu der Auslassöffnung in Rotation um die erste bzw. zweite Achse versetzt werden,
eine Generatorvorrichtung welche mechanisch mit den Drehkolben gekoppelt ist zum Antrieb durch die Drehkolben,
**dadurch gekennzeichnet, dass** der erste und der zweite Drehkolben jeweils eine Anzahl von N Flügeln aufweist, wobei N größer oder gleich zwei ist und die Flügel des ersten und des zweiten Drehkolbens schraubenförmig entlang der Umfangsfläche des Drehkolbens verlaufen und hierbei einen Winkel von zumindest 300° dividiert durch N, vorzugsweise 360° dividiert durch N überstreichen und dass die Generatorvorrichtung einen ersten elektrischen Generator, der mit dem ersten Drehkolben mechanisch gekoppelt ist zum Antrieb durch den ersten Drehkolben und einen zweiten elektrischen Generator, der mit dem zweiten Drehkolben mechanisch gekoppelt ist zum Antrieb durch den zweiten Drehkolben, umfasst.

2. Wasserkraftanlage nach Anspruch 1,
**dadurch gekennzeichnet, dass** der erste Generator direkt von einer ersten Welle angetrieben wird, auf welcher der erste Drehkolben drehmomentfest befestigt ist und dass der zweite Generator direkt von einer zweiten Welle angetrieben wird, auf welcher der zweite Drehkolben drehmomentfest befestigt ist.

3. Wasserkraftanlage nach Anspruch 1 oder 2,
**dadurch gekennzeichnet, dass** die Wasserkraftanlage getriebelos ist.

4. Wasserkraftanlage nach Anspruch 2 oder 3,
**dadurch gekennzeichnet, dass** zumindest ein Drehkolben, insbesondere zumindest eine der Wellen in zumindest einem Gleitlager drehbar gelagert ist, welches mittels des geförderten Fluidmediums geschmiert wird, vorzugsweise die erste und die zweite Wellen in Gleitlagern gelagert sind, die durch das geförderte Fluidmedium geschmiert werden.

5. Wasserkraftanlage nach einem der vorgehenden Ansprüche,
**dadurch gekennzeichnet, dass** die mechanische Synchronisation der Drehbewegung des ersten und zweiten Drehkolbens durch die miteinander kämmenden ersten und zweiten Drehkolben erfolgt.

6. Wasserkraftanlage nach einem der vorhergehenden Ansprüche,
**dadurch gekennzeichnet, dass**
- jeder Drehkolben dreiflügelig ist und sich jeder Flügel schraubenförmig über einen Winkel von zumindest 100°, vorzugsweise 120° erstreckt, oder
- jeder Drehkolben vierflügelig ist und sich jeder Flügel schraubenförmig über einen Winkel von zumindest 75°, vorzugsweise 90° erstreckt,
- jeder Drehkolben sechsflügelig ist und sich jeder Flügel schraubenförmig über einen Winkel von zumindest 50°, vorzugsweise 60° erstreckt.

7. Wasserkraftanlage nach einem der vorhergehenden Ansprüche,
**dadurch gekennzeichnet, dass** der Motorraum zwischen dem ersten und dem zweiten elektrischen Generator angeordnet ist.

8. Wasserkraftanlage nach einem der vorhergehenden Ansprüche,
**dadurch gekennzeichnet, dass** der erste und der zweite Generator
- in einem ersten Betriebsmodus als Kraftmaschine zur Wandlung von elektrischer Energie in Strömungsenergie geschaltet sind, und
- in einem zweiten Betriebsmodus als Generatormaschine zur Wandlung von Strömungsenergie in elektrische Energie geschaltet sind.

9. Verfahren zum Erzeugen elektrischer Energie aus einer Flüssigkeitsdruckdifferenz mit einer Drehkolbenmotor,
**dadurch gekennzeichnet, dass** mit der Flüssigkeitsdruckdifferenz ein erster und ein zweiter, mit dem ersten kämmender Drehkolben des Drehkolbenmotors angetrieben und in Rotation entsprechend eine erste und eine zweite Achse versetzt werden, wobei der erste und zweite Drehkolben jeweils eine Anzahl von N Flügeln aufweisen, wobei N größer oder gleich zwei ist und die Flügel des ersten und des zweiten Drehkolbens schraubenförmig entlang der Umfangsfläche des Drehkolbens verlaufen und hierbei einen Winkel von zumindest 300° dividiert durch N, vorzugsweise 360° dividiert durch N überstreichen,
und dass der erste Drehkolben einen ersten elektrischen Generator, der mit dem ersten Drehkolben mechanisch gekoppelt ist antreibt und der zweite Drehkolben eines zweiten elektrischen Generator, der mit dem zweiten Drehkolben mechanisch gekoppelt ist, antreibt.

10. Verfahren nach Anspruch 9,
**dadurch gekennzeichnet, dass** die Rotation der miteinander kämmenden Drehkolben des Drehkolbenmotors nicht mittels eines Getriebes synchronisiert werden.

## Claims

1. Hydroelectric power plant, with
a rotary piston motor, comprising
- a motor housing with a motor chamber,
- an inlet opening and an outlet opening,
- a first, multi-bladed rotary piston which is arranged in the motor chamber and is mounted rotatably about a first axis, and
- a second, multi-bladed rotary piston arranged in the motor chamber, which is rotatably mounted about a second axis spaced from the first axis and engages with the first rotary piston in a meshing manner,
wherein the first and second rotary pistons are set in rotation about the first and second axes, respectively, by a fluid flow from the inlet to the outlet opening,
a generator device which is mechanically coupled to the rotary pistons to be driven by the rotary pistons,
**characterized in that** the first and second rotary pistons each have a number of N blades, where N is greater than or equal to two, and the blades of the first and second rotary pistons extend helically along the circumferential surface of the rotary piston and have an angle of at least 300° divided by N, preferably 360° divided by N, and **in that** the generator device comprises a first electrical generator, which is mechanically coupled to the first rotary piston for drive by the first rotary piston, and a second electrical generator, which is mechanically coupled to the second rotary piston for drive by the second rotary piston.

2. Hydroelectric power plant according to claim 1,
**characterized in that** the first generator is driven directly by a first shaft, on which the first rotary piston is fastened in a torque-resistant manner, and **in that** the second generator is driven directly by a second shaft, on which the second rotary piston is fastened in a torque-resistant manner.

3. Hydroelectric power plant according to claim 1 or 2,
**characterized in that** the hydropower plant is gearless.

4. Hydroelectric power plant according to claim 2 or 3,
**characterized in that** at least one rotary piston, in particular at least one of the shafts, is rotatably mounted in at least one plain bearing which is lubricated by means of the conveyed fluid medium, preferably the first and the second shafts are mounted in plain bearings which are lubricated by the conveyed fluid medium.

5. Hydropower plant according to one of the preceding claims,
**characterized in that** the mechanical synchronization of the rotary movement of the first and second rotary pistons is effected by the first and second rotary pistons meshing with one another.

6. Hydropower plant according to one of the preceding claims,
**characterized in that**
- each rotary piston has three blades and each blade extends helically over an angle of at least 100°, preferably 120°, or
- each rotary piston has four blades and each blade extends helically over an angle of at least 75°, preferably 90°,
- each rotary piston has six blades and each blade extends helically over an angle of at least 50°, preferably 60°.

7. Hydroelectric power plant according to one of the preceding claims,
**characterized in that** the motor chamber is arranged between the first and the second electric generator.

8. Hydropower plant according to one of the preceding claims,
**characterized in that** the first and the second generator
- are connected in a first operating mode as a pump device for converting electrical energy into flow energy, and
- in a second operating mode, are connected as a generator machine for converting flow energy into electrical energy.

9. Method for generating electrical energy from a liquid pressure difference with a rotary piston motor
**characterized in that** a first and a second rotary piston of the rotary piston motor meshing with the first rotary piston are driven by the liquid pressure difference and are set in rotation corresponding to a first and a second axis, the first and second rotary pistons each having a number of N blades, N being greater than or equal to two, and the blades of the first and second rotary pistons extending helically along the circumferential surface of the rotary piston and sweeping an angle of at least 300° divided by N, preferably 360° divided by N,
and **in that** the first rotary piston drives a first electrical generator which is mechanically coupled to the first rotary piston and the second rotary piston drives a second electrical generator which is mechanically coupled to the second rotary piston.

10. Method according to claim 9,
**characterized in that** the rotation of the meshing rotary pistons of the rotary piston motor are not synchronized by means of a gearbox.

## Revendications

1. Centrale hydroélectrique avec
un moteur à pistons rotatifs, comprenant
- un carter de moteur avec un compartiment moteur,
- une ouverture d'entrée et une ouverture de sortie,
- un premier piston rotatif à plusieurs ailettes, qui est disposé dans le compartiment moteur et est monté de manière à pouvoir tourner autour d'un premier axe, et
- un deuxième piston rotatif à plusieurs ailettes disposé dans le compartiment moteur, qui est monté de manière à pouvoir tourner autour d'un deuxième axe tenu à distance du premier axe et qui vient en prise par engrènement avec le premier piston rotatif,
dans lequel le premier et le deuxième piston rotatif sont amenés en rotation autour du premier ou du deuxième axe par un écoulement fluidique depuis l'ouverture d'entrée à l'ouverture de sortie,
un dispositif générateur, qui est couplé mécaniquement au piston rotatif pour l'entraînement par les pistons rotatifs,
**caractérisée en ce que** le premier et le deuxième piston rotatif présentent respectivement un nombre de N ailettes, dans lequel N est supérieur ou égal à 2 et les ailettes du premier et du deuxième piston rotatif s'étendent de manière hélicoïdale le long de la surface périphérique du piston rotatif et balayent dans ce cadre un angle d'au moins 300° divisé par N, de préférence de 360° divisé par N, et que le dispositif générateur comprend un premier générateur électrique, qui est couplé mécaniquement au premier piston rotatif pour l'entraînement par le premier piston rotatif et un deuxième générateur électrique, qui est couplé mécaniquement au deuxième piston rotatif pour l'entraînement par le deuxième piston rotatif.

2. Centrale hydroélectrique selon la revendication 1,
**caractérisée en ce que** le premier générateur est entraîné directement par un premier arbre, sur lequel le premier piston rotatif est fixé de manière solidaire en couple de rotation, et que le deuxième générateur est entraîné directement par un deuxième arbre, sur lequel le deuxième piston rotatif est fixé de manière solidaire en couple de rotation.

3. Centrale hydroélectrique selon la revendication 1 ou 2, **caractérisée en ce que** la centrale hydroélectrique est sans transmission.

4. Centrale hydroélectrique selon la revendication 2 ou 3,
**caractérisée en ce qu'**au moins un piston rotatif, en particulier au moins un des arbres, est monté de manière à pouvoir tourner dans au moins un palier lisse, lequel est lubrifié au moyen du milieu fluide refoulé, de préférence le premier et le deuxième arbre sont montés dans des paliers lisses, qui sont lubrifiés par le milieu fluide refoulé.

5. Centrale hydroélectrique selon l'une quelconque des revendications précédentes,
**caractérisée en ce que** la synchronisation mécanique du déplacement de rotation du premier et du deuxième piston rotatif est effectuée par les premier et deuxième pistons rotatifs s'engageant l'un avec l'autre.

6. Centrale hydroélectrique selon l'une quelconque des revendications précédentes,
**caractérisée en ce que**
- chaque piston rotatif est à trois ailettes et chaque ailette s'étend de manière hélicoïdale sur un angle d'au moins 100°, de préférence de 120°, ou
- chaque piston rotatif est à quatre ailettes et chaque ailette s'étend de manière hélicoïdale sur un angle d'au moins 75°, de préférence de 90°,
- chaque piston rotatif est à six ailettes et chaque ailette s'étend de manière hélicoïdale sur un angle d'au moins 50°, de préférence de 60°.

7. Centrale hydroélectrique selon l'une quelconque des revendications précédentes,
**caractérisée en ce que** le compartiment moteur est disposé entre le premier et le deuxième générateur électrique.

8. Centrale hydroélectrique selon l'une quelconque des revendications précédentes,
**caractérisée en ce que** le premier et le deuxième générateur
- sont activés dans un premier mode de fonctionnement en tant que machine motrice pour transformer de l'énergie électrique en énergie d'écoulement, et
- sont activés, dans un deuxième mode de fonctionnement, en tant que machine génératrice pour transformer de l'énergie d'écoulement en énergie électrique.

9. Procédé de génération d'énergie électrique à partir d'une différence de pression de liquide avec un moteur à pistons rotatifs,
**caractérisé en ce qu'**avec la différence de pression de liquide, un premier et un deuxième piston rotatif s'engageant avec le premier piston rotatif du moteur à pistons rotatifs sont entraînés et un premier et un deuxième axe sont amenés en rotation de manière correspondante, dans lequel le premier et le deuxième piston rotatif présentent respectivement un nombre de N ailettes, dans lequel N est supérieur ou égal à 2 et les ailettes du premier et du deuxième piston rotatif s'étendent de manière hélicoïdale le long de la surface périphérique du piston rotatif et balayent dans ce cadre un angle d'au moins 300° divisé par N, de préférence de 360° divisé par N,
et que le premier piston rotatif entraîne un premier générateur électrique, qui est couplé mécaniquement au premier piston rotatif, et le deuxième piston rotatif entraîne un deuxième générateur électrique, qui est couplé mécaniquement au deuxième piston rotatif.

10. Procédé selon la revendication 9,
**caractérisé en ce que** les rotations des pistons rotatifs s'engageant l'un avec l'autre du moteur à pistons rotatifs ne sont pas synchronisées au moyen d'une transmission.
